# EUROPEAN PATENT APPLICATION

(11) **EP 0 690 208 A1**
(43) Date of publication of application: **03.01.1996**
(21) Application number: 95103574.0
(22) Date of filing: 13.03.1995
(51) Int. Cl.: F01M 11/04, F16N 31/00, F16N 33/00

(54) **Device for engine lubricating oil change in motor vehicles**

(30) Priority: 29.06.1994 IT GE940024 U
(71) Applicant: Ferraro, Bruno, I-17010 Murialdo (SV) (IT)
(72) Inventor: Ferraro, Bruno, I-17010 Murialdo (SV) (IT)
(74) Representative: Ferrarotti, Giovanni

(57) **Abstract**

The oil change device consists of a container (1) closed by a recessed cover (4) and provided with shelves (6) for tools and expendable materials, whereas access to the drip trays (7) on the container bottom is ensured by slots (8) machined in one side of the tank and to the large tank (31) in which the depleted oil is emptied. On the container cover is mounted a cup shaped sump (12), the height of which may be adjusted, in which several oil cans (21) may be emptied. The drain pipe (15) at the bottom of the sump is connected by a flexible tube (hose) (16) to a distributor (17) with cock (18) inserted in the filler neck (19) of the engine or in a slot (8) so that any residual oil will be collected in the drip tray (7). Furthermore, the system includes a funnel (33) into which the depleted oil is discharged and a engine oil suction pump (37) by which the depleted oil is discharged through a bifurcated tube (36) into the large tank (31).

## Description

It is well known that the depleted lubricating oil of engines has to be periodically renewed while oil has to be topped up in some motor vehicles.

This complete renewal and topping up of lubricating oil are important operations since they have to be performed quickly and without oil waste or spills that would soil and cause pollution.

Normally the lubricating oil is poured into the engine by pouring the oil from the can into a funnel placed in the upper engine filler plug. This causes a waste of time and of lubricant since the operator seldom waits until the last can has been completely emptied. Furthermore, the oil filler may be variously shaped according to its manufacturer and the filler neck is therefore not sufficiently sealed off to prevent overflow and drippings that will certainly soil the engine.

At present, the oil cans are opened with a perforating tool the body of which is designed to regulate the oil flow . This tool has to be retrieved for future utilization.

Furthermore, a complete oil change often involves other operations like changing the oil filter, checking the spark plugs, the distributor etc. for which other tools and expendable materials are necessary that usually are not at hand and therefore take time.

This invention covers a system to change and renew the lubricating oil in automotive vehicles without the above mentioned drawbacks while making immediately available all tools and accessories required for maintenance and servicing of the vehicles.

The system subject matter of this invention is illustrated in its exemplified implementation in the following drawings in which:
**Fig** 1 shows a vertical lateral view and partial cross section of the device subject matter of this invention, equipped to receive the engine oil,
**Fig.2** shows a rear view of the system illustrated in fig.1,
**Fig.3** shows a front view of the system illustrated in fig. 1,
**Fig.4** shows a top view of the system in fig.1,
**Fig.5** shows a vertical section of the oil sump for topping up,

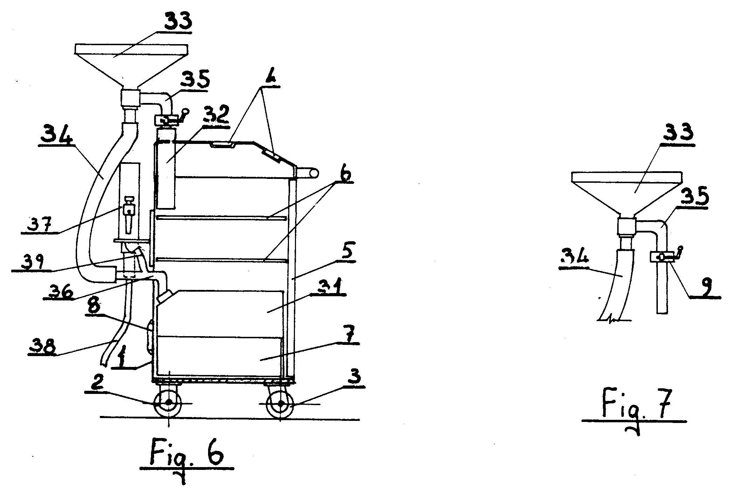

**Fig.**6 shows a vertical lateral view and partial section of the system subject matter of this invention, equipped for discharge of the engine oil,

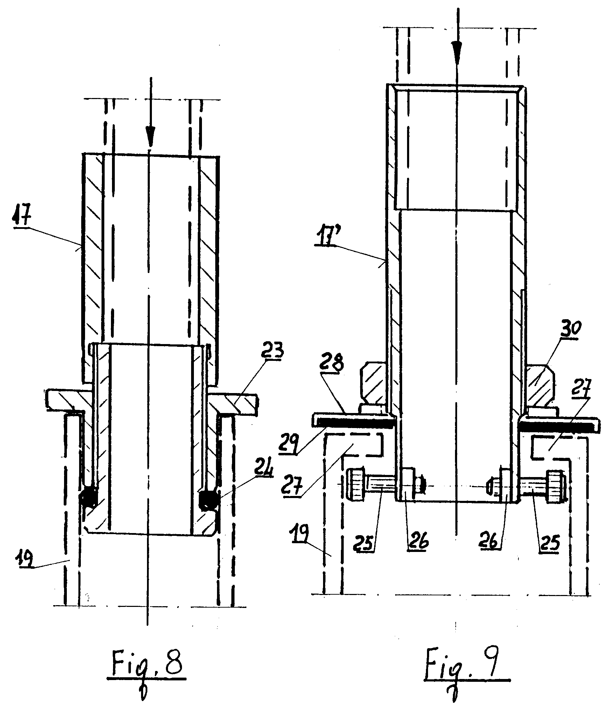

**Fig. 7** shows a lateral view of the funnel through which the oil is engine oil is drained,
**Fig. 8** shows the accessory through which the oil is let into the engine filler neck,
**Fig.9** shows the outfit accessory for universal inlet into the engine filler neck.

With reference to the above mentioned figures, the system in question is consisting of a - usually parallelepiped shaped- container 1 with square or rectangular base provided with a set of two fixed 2 and two traversing wheels 3.

At the top, the container is closed by a cover provided with variously shaped recesses or niches 4 in which to keep service tools and spanners while an outwards opening door 5 is located at the back of the container 1.

Inside the container there are several shelves 6 on which to store tools and equipment, wiping rags, tins, expendable material and other service accessories while one or more drip trays 7 are located at the bottom of the container to collect any residual oil after fresh oil has been let into the engine. The depleted oil is discharged into a large tank 31, usually mounted centrally inside the container 1. One or more slots 8 are provided in the front wall of the container at tray level (7). Their use will be explained later on.

A vertical pipe 32 in which to fit a shaft 10 with its supports 11 on which the oil sump 12 is resting. The height of this sump 12 is adjustable with the aid of a lever operated holdfast 9 mounted on the vertical shaft 10.

The sump has a protective filter screen 13 and numerous spikes 14 that will perforate the oil cans or tins 21 before they are emptied.

A tubular branch stub 15 in the lower part of the sump 12 is connected by a hose 16 to a delivery pipe 17 with cock 18. The distributor 17 is inserted and sealed off in the engine filler neck 19 and may be of various design according to the engine type as described hereinafter.

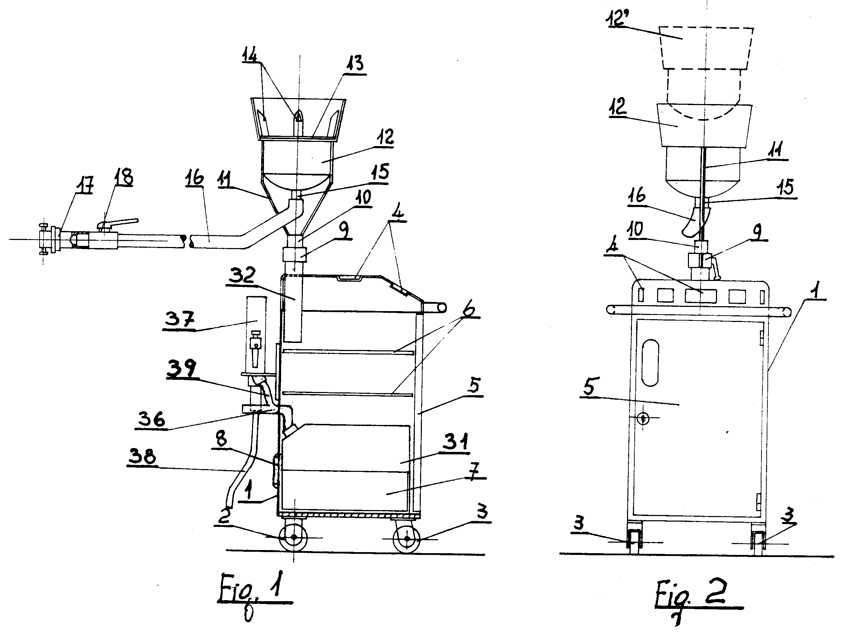

In fig.2, the sump 12 is shown by a continuous line in lowered position and by a short-dashes line in raised position 12' so that the oil fill may be adjusted according to the height of the engine filler neck .

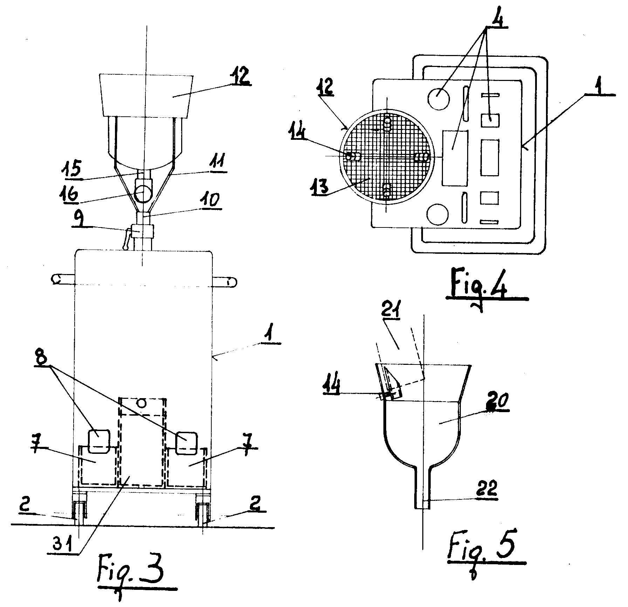

Fig. 5 shows a cup 20 as an accessory of the system. This cup 20 is provided with spikes 14 to open the can 21 and also acting as a support and may also be used for topping up by fitting its lower discharge pipe 22 into the filler neck 19 of the engine.

As explained in fig.8, the configuration of the distributor 17 is based upon the shape of the filler neck 19 (for instance for a FIAT UNO car). It consists of an angle section 23, one leg of which is resting on the opening of the filler neck 19 so as to form the seat for the packing O-ring 24 pressed against the inner wall of the filler neck.

Fig. 9 shows an universal type distributor 17' which may be used for filler necks of any engine type. It has two opposed and radially adjustable expanders 25 of any type, such as for instance two bolts 25 screwed to two blocks 26 secured to the lower end of the distributor 17'. When rotated clockwise by 90°, these expanders will engage the known locking flanges 27 of the filler plug, which as known, is provided with a bajonet joint. Furthermore, an axially mobile, flat flange 28, the lower end of which is provided with a packing disc 29, is resting on the filler neck outlet 19. This flange 28 with its packing is pressed down or released by a screw nut 30 so as to lock down and seal off the end of the distributor on the filler neck or release it so that it can be removed when rotated counterclockwise by 90°.

These distributors 17, 17' may be connected, according to need, to the end of the hose 16 downstream the cock 18, or to the end of the outlet 22 of the sump 20 shown in fig.5.

According to the above description, the oil charge device is operated as follows: the distributor 17 (or 17') with its open cock 18 is inserted in the filler neck 19, while ensuring a perfect seal between distributor and filler neck. The spikes 14 will then perforate at the same time several oil cans 21 resting on these spikes while they are being emptied. The oil flows rapidly in the engine.

The cock 18 is then closed and the distributor is removed from the filler neck and placed in one of the slots 8 so that the oil, after the cock 18 has been opened, may be collected on one of the drip trays 7.

Furthermore, according to this invention, the system in question is provided with a funnel 33 connected to the drain pipe 34 and supported by a crank shaft 35 to be fitted in the pipe 32 supporting the oil sump 12. This funnel 33 replaces the sump 12 and may be blocked at variable height by a lever controlled clamp 9 and may rotate on a horizontal plane.

The funnel 33 serves to collect the oil drained from the engine of an automotive vehicle that has been jacked up or lifted with proper hoisting gear.

The discharge tube 34 of the funnel 33 is connected to one end of a forked pipe 36 entering the large tank 31.

The system subject matter of this invention is also equipped with an oil pump 37 drawing the oil from the engine. This pump is particularly useful for motor vehicles not provided with an engine oil discharge device.

The afore mentioned pump 37 is fitted with a suction line 38 and a delivery pipe 39 to be connected to the other end of the fork tube 36 entering the large tank 31.

It follows that the oil may be drained from the engine as usually, when the car is at ground level, the oil being collected in tanks placed below the outlet opening, or else the oil may be drained by lifting the car and using the funnel 33 or, with the car at ground level, by using the suction pump 37.

Thus, all operations for discharge of the depleted oil and for the supply of fresh engine oil may be performed quickly, in an orderly way without loss or pollution. Similarly, the system is extremely useful for all maintenance and inspections since it is equipped with all accessories normally required for these operations.

## Claims

1. Lubricating oil change **system** for automotive vehicles *characterized* in that it consists of:
- a usually parallelepiped shaped container (1) equipped with two lower fixed (2) and two traversing wheels (3) and an upper cover (4) with numerous shaped recesses in which to lodge tools and materials and a door (5) at the back of the container (1);
- various shelves (6) inside this container (1) on which to store equipment, tools, wiping rags, tins, expendable materials etc ,
- one or more trays (7) placed on the bottom of the container (1) on which to collect oil drippings from the distributor (17);
- one or more slots (8) machined at drip tray level (7) in which to slip the distributor (17) after filling has been completed,
- a large tank (31) in which to discharge the depleted engine oil;
- a vertical pipe (32) mounted on top of the container (1) housing a vertical shaft (10, 35) the height of which may be adjusted by means of the lever operated clamp (9),
- a sump (12) secured by supporting elements (11) to the above shaft (10) in which the oil is poured from the oil cans (21),
- a protective filter screen (13) with numerous spikes (14) to open and support the oil cans (21) while they are being emptied and drained in the sump (12),
- a lower drain pipe (15) at the bottom of the sump (12) connected by a flexible hose (16) to the distributor (17) and provided with a cock (18), so that the distributor (17) may be airtight fitted into the filler neck (19) of the engine or in one of the slots (8) to let any residual oil drip on the tray (7);
- a funnel (33) the height of which may be adjusted and positioned by means of a crank shaft (35) inside this pipe (32), the funnel being interchangeable with the sump (12) into which the oil is poured;
- a pipe (34) connected by a forked branch tube (36) to the tank (31) into which the funnel (33) is drained,
- a pump (37) with suction line (38) to pump the oil from the engine and with a delivery line (39) connected to the second end of the forked tube (36) through which the depleted oil is discharged in the collecting tank (31).

2. System as described in claim 1 *characterized* in that the outfit includes a cup (20) fitted with a spike (14) and a support for the oil can (21) which is particularly useful for topping up.

3. System as described in claim 1, *characterized* in that the distributor (17) is provided with an angle flange (23) resting on the inlet opening of the filler neck(19) thus forming the seat for an O-ring (24) seal inside the filler neck.

4. System as described in claim 1, *characterized* in that the distributor (17') has two opposed and radially adjustable locking expansions (25) inside the filler neck (19) to lodge the plug with bajonet joint, and is provided with an axially mobile flat flange (28) with disc seal (29) and threaded nut (30) to tightly lock or remove the distributor from the filler neck.

5. System as described in claim 3 and 4, *characterized* in that distributors (17, 17') of different make may be interchangeable and mounted on the outlet of the flexible hose (16) downstream the cock (18) and outlet (22) of the cup (20) which is part of the outfit of the system.

6. Operation of the system described in claim 1 *characterized* by the following oil change sequence:
- place the distributor (17, 17') oiltight in the filler neck (19) of the engine and open the cock (18),
- Use the spike (14) to open various oil cans (21), empty them so that the oil is poured into the engine;
- Close the cock (18),
- remove the distributor (17, 17') from the filler neck (19) and slip it into one of the slots (8), then open the cock again so that any residual oil will be collected on the drip tray (7).

7. Operation of the system as described in claim 1, *characterized* in that the depleted oil may be discharged either :
- by lifting the car and discharging the oil through the engine drain pipe into the funnel (33) and recovery of the depleted oil into the tank (31), or
- by pumping the oil with the suction pump (37) and recovery of the depleted oil into the tank (31).
